# EUROPEAN PATENT APPLICATION

(11) **EP 3 219 770 A1**
(43) Date of publication of application: **20.09.2017**
(21) Application number: 16206457.0
(22) Date of filing: 05.10.2012
(51) Int. Cl.: C09D 127/12, C09D 133/06, C09D 167/00, C09D 169/00, C09D 175/00, C09D 177/00

(54) **COATING COMPOSITIONS COMPRISING A POLYMER OF 2,3,3,3-TETRAFLUOROPROPENE AND A FILM-FORMING POLYMER**

(30) Priority: 05.10.2011 US 201161543780 P; 05.10.2011 US 201161543714 P; 04.10.2012 US 201213645444; 04.10.2012 US 201213645437
(62) Divisional of application: 12838553.1
(71) Applicant: Honeywell International Inc., Morris Plains, NJ 07950 (US)
(72) Inventor: The designation of the inventor has not yet been filed
(74) Representative: Crooks, Elizabeth Caroline

(57) **Abstract**

The present invention relates to a coating composition comprising a film-forming polymer and a fluoropolymer comprising polymerized units of 2,3,3,3-tetrafluoropropene (HFO-1234yf).

## Description

### CROSS REFERENCE TO RELATED APPLICATIONS

The present application claims priority to U.S. Provisional Application Ser. No. 61/543,780, filed on October 5, 2011, the contents of which are incorporated herein by reference in their entirety. The present application also claims priority to U.S. Provisional Application Ser. No. 61/543,714, filed on October 5,2011, the contents of which are incorporated herein by reference in their entirety.

Also incorporated herein by reference in its entirety is US Application Ser. No. 13/645,437, filed on October 4, 2012, and having Applicant Attorney Docket No. H0033387-4640.

### FIELD OF THE INVENTION

The present invention generally relates to a novel polymeric material formed, at least in part, from monomeric material comprising 2,3,3,3-tetrafluoropropene (CF₃CF=CH₂, 1234yf) and to compositions and uses thereof.

### BACKGROUND OF THE INVENTION

Several fluorine-containing monomers, polymers and copolymers are known. See, for example, U.S. Pat. Nos. 2,970,988, 2,931,840, 2996,555, 3,085,996, 6,486,281, 6,867,273 (see Column 3, line 29-50) and U.S. Pat. No. 6,703,450 (see Column 2, line 42, to Column 3, line 5, for monomers). Although certain of these known materials impart important and beneficial properties to certain materials, one disadvantage associated with many of these materials is the difficulty of adhering the material whether in the form of a coating or otherwise, to a substrate or other material.

The present invention provides, in one aspect, a practical process for making these polymers and, in another aspect, to novel materials/compositions and uses of those materials/compositions in various applications, including applications as sealants, gaskets, tubing, elastomers, waterproofing, and thermoplastic and thermoset coatings.

### SUMMARY

Aspects of the present invention relate to novel polymeric materials formed from monomeric materials that include 2,3,3,3-tetrafluoropropene (CF₃CF=CH₂, HFO-1234yf) and to polymeric compositions, coating compositions, and methods and articles involving the using such compositions.

In one preferred aspect, the present invention relates to a polymeric composition or coating composition that includes a fluoropolymer comprising polymerized monomers of at least 2,3,3,3-tetrafluoropropene (HFO-1234yf) and having a surface tension of no greater than about 30 mN/m and in certain preferred aspects between about 15 mN/m and about 30 mN/m. The fluoropolymer may be provided as a homopolymer of HFO-1234yf or may be co-polymerized with one or more co-monomers. The co-monomers may be any halogenated or non-halogenated monomer, including those described herein or otherwise known in the art. In certain aspects, the halogenated monomer is a fluorinated co-monomer, which in certain embodiments comprises a a halogenated alkene having from 2 to 4 carbon atoms, preferably in certain embodiments a halogenated ethylene, and even more preferably in certain embodiments a fluorinated ethylene. Examples of such co-monomers include, but are not limited to, vinylidene fluoride, vinylidene difluoride, chlorotrifluoroethylene, or combinations thereof. In further aspects, the non-halogenated co-monomer may be comprised of an acrylic or derivative thereof or of an acrylate or methacrylate ester, particularly, thought not exclusively, an acrylate or methacrylate of 4 to 24 carbon atoms.

In embodiments containing HFO-1234yf and a co-monomer, HFO-1234yf may be provided in the fluoropolymer in an amount between about 1 and about 99 weight percent and the co-monomer(s) between about 1 and about 99 weight percent based on the total monomeric material in the reaction medium. Alternatively, HFO-1234yf is provided in the fluoropolymer in an amount between about 10 and about 90 weight percent and the co-monomer(s) between about 10 and 90 weight percent, or HFO-1234yf is provided in the fluoropolymer in an amount between about 30 and about 70 weight percent and the co-monomer(s) between about 30 and 70 weight percent. In even further embodiments, HFO-1234yf is provided in the fluoropolymer in an amount at or greater than about 50 weight percent and the co-monomer(s) in an amount at or less than about 50 weight percent.

The coating composition may, optionally, include one or more additives. Non-limiting examples of such additives may be selected from the group silica, carbon- or silica-based nano-particules, therapeutic agents or compounds, high- or low-temperature additives, fillers, pigments, saturants, lubricants, tackifiers, adhesion promoters, film-formers, thickeners, processing aids, electrically conductive materials, electrically insulative materials, stabilizers, impact modifiers, viscosity modifiers, and combinations thereof. Additional or specific additives are provided herein or will be readily apparent to the skilled artisan on the basis of the disclosure herein.

The coating compositions of the present invention may be applied to a surface of an article using any methods identified herein or otherwise known in the art, particularly application methods consistent with the uses, articles, and/or devices provided herein. In one aspect, the coating composition is applied to a surface of a substrate by (1) dispersing in a polar, apriotic solvent a fluoropolymer composition comprising 2,3,3,3-tetrafluoropropene (HFO-1234yf) to form a solution; (2) applying the solution to a surface of a substrate; and (3) curing or drying the solution. In solution, the fluoropolymer concentration may be between about 1 and about 50 weight percent, between about 1 to about 25, between about 1 to about 10 weight percent, or between about 1 to about 5 weight percent. The polar, apriotic solvent may be selected from the group consisting of ethyl acetate, acetone, tetrahydrofuran or mixtures thereof. Upon curing, the final coated composition may comprise HFO-1234yf homo- or hetero-polymer in an amount at or greater than 10%, at or greater than 25%, at or greater than 50%, at or greater than 75%, or at or greater than 90%.

In certain aspects, prior to applying the solution, the surface of the article may be pretreated to improve or facilitate bonding of the coating to the surface. In one aspect, the pretreatment may include exposing the surface to at least one oxidizing agent and/or at least one adhesion promoting agent.

In alternative application methods, the fluoropolymer may be applied using a film-forming coating composition. That is, the coating composition includes a film-forming substrate; and a fluoropolymer comprising polymerized monomers of 2,3,3,3-tetrafluoropropene (HFO-1234yf). In certain non-limiting embodiments, the film-forming substrate compatibly promotes bonding or cross-linking with one or more functional elements of the fluoropolymer. Non-limiting examples of film-forming substrates include one or more materials selected from the group consisting of polyesters, polyester urethanes, polycarbonates, polycarbonate urethanes, acrylics, acrylic polyurethanes, polyethers, polyether urethanes, ethylene vinyl alcohol copolymers, ethylene vinyl alcohol copolymer urethanes, polyamides, polyamide urethanes, polyamide ureas, polyacrylamides, polyacrylamide urethanes and combinations thereof.

Within the film-forming composition, the fluoropolymer is provided in an amount of at least 10 weight percent, at least 25 weight percent, or at least 50 weight percent. The composition may also include one or more additional additives, such as pigments, fillers, or other additives, which are described in greater detail herein.

It is contemplated that the polymeric materials of the present invention will find utility and/or exhibit advantage in all applications in which previously used fluoropolymers have been applied. In certain highly preferred embodiments, the fluoropolymer material comprising poly-1234yf can be used in connection with medical devices, power and energy devices and systems, military devices and systems, aeronautical devices and systems, military applications and systems, automotive applications and systems, architectural materials and devices, marine applications or other applications involving exposure to high concentrations or levels of water or other fluids, electrical systems and devices, and combinations of these. Examples of such devices and articles are provided herein, but are not considered limiting to the invention.

Additional advantages, compositions, uses and associated methods will be readily apparent to the skill artisan on the basis of the disclosure provided herein.

### DETAILED DESCRIPTION OF PREFERRED EMBODIMENTS

In one broad aspect the present invention relates to polymeric materials which range from those formed from monomeric materials which comprise HFO-1234yf in an amount that is sufficient to impart desirable and advantageous properties to the polymer formed therefrom to monomeric materials which consists essentially of, and in certain embodiments consist of, substantially of HFO-1234yf. As used herein, the term "poly- 1234yf" or "HFO-1234yf polymer" is intended to be understood in its broad sense to include all such polymeric materials which comprise material formed from HFO-1234yf including a homopolymer or heteropolymer thereof.

In certain aspects, the present invention relates to polymer compositions formed using at least HFO-1234yf as a monomer, to coating compositions that include such a polymer and/or to articles or devices that are coated and/or impregnated with the HFO-1234yf polymer. Applicants have surprisingly and unexpectedly discovered that polymers of HFO-1234yf exhibit low surface tension, i.e. a surface tension below 30c mN/m, and in certain preferred embodiments between about 15 mN/m and about 30 mN/m. When applied to a surface of an article as a coating or within a coating composition, or when impregnated into the article during manufacture, the HFO-1234yf containing polymer provides to the article one or more surprising and unexpectedly advantageous properties including, but not limited to, insulation, hydrophobicity, anti-corrosion, or other benefits discussed herein.

Without intending to be bound by or to any particular theory of operation, it is believed that the advantageous binding properties of the polymeric materials according to certain preferred embodiments of the present invention are derived, at least in part, from the presence of a pendant hydrogen moiety which exists on the polymeric material according to the present invention and which facilitates bonding of the present materials to a variety of surfaces. Furthermore, applicants believe that in many embodiments the bonding properties of the polymeric materials of the present invention are unexpectedly superior to those previously known such as TEFLON^{®}. These unexpectedly advantageous properties are present while at the same time possessing a low surface energy. Once again, while not wishing to be bound by or to any particular theory of operation, it is contemplated that the advantageous and desirable low surface energy of the polymeric materials according to the present invention are due, at least in part, to the sufficiently high fluorine content on the carbon backbone of the preferred polymeric materials.

It is contemplated that the polymeric materials according to the present invention may be formed using one or a combination of different applications and techniques known in the art. In certain preferred embodiments, the polymerized 2,3,3,3-tetrafluoropropene (poly-1234yf) is formed using one or a combination of several preferred techniques, including, (1) emulsion polymerization; (2) solution or suspension polymerization; (3) supercritical carbon dioxide polymerization; (4) stereoselective polymerization; (5) transition metal catalyzed polymerization; (6) radiation or thermal polymerization; and combinations thereof. A detailed description of such preferred methods is disclosed in United States provisional application number 61/543,714 and also in US Application Ser. No. 13/645,437, filed on October 4, 2012, and having Applicant Attorney Docket No. H0033387-4640, the contents each of which are incorporated herein by reference in their entirety.

The polymer compositions of the present invention may be provided as a homopolymer of HFO-1234yf. In alternative embodiments, however, HFO-1234yf may be co-polymerized with one or more co-monomers, which in certain aspects are known or otherwise useful in similar coating compositions, to improve hydrophobicity, to act as an anti-corrosive, to insulate the article from environmental conditions, or the like. Non-limiting examples of such co-monomers include vinylidene fluorine; vinylidene difluoride; acrylics, methyl acrylate or other acrylic derivatives; alkenes and any fluorinated version, such as ethylene, tri-fluoroethylene; chlorotrifluoroethylene; tetrafluoroethylene; hexafluoropropylene, and mixtures thereof.

Additional or alternative halogenated co-monomers and non-halogenated co-monomers may also be used in modest or significant amounts. Such halogenated comonomers may include an olefin co-monomer represented by the formula: R¹R²C=CR³R⁴ wherein each of R¹, R², R³, and R⁴ is independently selected from hydrogen, chloro, fluoro, bromo, iodo, hydroxy, alkoxy, alkoxycarbonyl, acyl, cyano, linear, branched or cyclic alkyl of 1-6 carbon atoms optionally substituted by at least one halogen, aryl of 1-6 carbon atoms optionally substituted by at least one halogen, with the proviso that at least one of the R¹, R², R³, and R⁴ groups is either halogen or a halogen-containing group, and a mixture thereof. Examples of fluoroolefin co-monomers may include, but are not limited to CFH=CH₂, CF₂=CH₂, CF₂=CFH, CF₂=CF₂, CClF=CF₂, CBrF=CF₂, CF₃CH=CHF, CF₃CF=CF₂, CF₃CH=CF₂, cis-CF₃CF=CHF, trans-CF₃CF=CHF, CF₃CH=CH₂, CF₃CF=CH₂, CF₃CF₂CF=CF₂, CF₃CF₂CH=CF₂, CF₃CF₂CF=CHF, CF₃CF₂CH=CH₂, CF₃CF₂CF=CH₂, CF₃CF₂CF₂CF=CF₂, CF₃CF₂CF₂CH=CF₂, CF₃CF₂CF₂CF=CHF, CF₃CF₂CF₂CH=CH₂, CF₃CF₂CF₂CF=CH₂, CF₃CH=CHCF₃, CF₃CH=CFCF₃, CF₃CF=CFCF₃, HOCH₂CH=CHF, HOCH₂CH=CF, HOCH₂CF=CH2, HOCH₂CF=CHF, HOCH₂CP-CF₂, HOCH₂CF=CH₂, CF₃CH=CHCl, CF₃CCl=CH₂, CF₃CCl=CHF, CF₃CCl=CF₂, CF₃CF=CHCl, CF₃CH=CFCl, (CF₃)₂C=CH₂, CF₃CF₂CF₂CF₂CH=CH₂, CF₃CF₂CF₂OCF=CF₂, CF₃OCF=CF₂, CF₃CF₂CF₂CF₂CH=CH₂, and mixtures thereof.

Additional examples of fluorinated co-monomers include α-trifluoromethylacrylate, α-trifluoromethylacrylate, α-trifluoromethylacrylate, vinyl ether of 4 to 24 carbon atoms substituted by at least one fluorine atoms, vinyl carboxylate of 5-24 carbon atoms wherein the carboxylate is substituted by at least one fluorine, and perfluoroalkyl vinyl ether.

Examples of non-halogenated co-monomers include alkene of 2-8 carbon atoms, acrylate or methacrylate ester of 4 to 24 carbon atoms, hydroxyethyl acrylate or methacrylate, hydroxypropyl acrylate or methacrylate, glycidyl acrylate or methacrylate, acrylonitrile, methacrylonitrile, vinyl ether of 4 to 24 carbon atoms optionally substituted by at least one hydroxy group, styrene, *alpha*-methylstyrene*, para*-methyl styrene, allyl alcohol, methallyl alcohol, vinyl acetate, vinyl carboxylate of 5-24 carbon atoms wherein the carboxylate is optionally substituted by at least one hydroxy group, methyl ethyl ketone, hydroxyethyl vinyl ether, hydroxybutyl vinyl ether, alkyl vinyl ether, and combinations thereof.

Specific examples of the non-halogenated co-monomers include alkene of 2-8 carbon atoms, acrylate or methacrylate ester of 4 to 24 carbon atoms, acrylonitrile, methacrylonitrile, vinyl ether, styrene, *alpha*-methylstyrene, *para*-methyl styrene, allyl alcohol, methallyl alcohol, vinyl acetate, vinyl carboxylate of 5-24 carbon atoms, methyl ethyl ketone, hydroxyethyl vinyl ether, hydroxybutyl vinyl ether, alkyl vinyl ether, and a mixture thereof. Examples of the non-fluorinated acrylic co-monomers include methyl acrylate, ethyl acrylate, propyl acrylate, butyl acrylate, 2-ethylhexylacrylate, octyl acrylate, dodecyl acrylate, stearyl acrylate, benzyl acrylate, phenyl acrylate, methylmethacrylate, ethylmethacrylate, butylmethacrylate, 2-ethylhexylmethacrylate, and combinations thereof.

In embodiments wherein HFO-1234yf is co-polymerized with one or more co-monomers, HFO-1234yf may be provided in an amount between about 1 and about 99 weight percent and the co-monomer(s), individually or collectively, may be between about 1 and about 99 weight percent. In further preferred embodiments, HFO-1234yf is provided in an amount between about 10 and about 90 weight percent and the co-monomer(s), individually or collectively, may be between about 10 and about 90 weight percent. In even further embodiments, HFO-1234yf is provided in an amount between about 30 and about 70 weight percent and the co-monomer(s), individually or collectively, may be between about 30 and about 70 weight percent. In even further embodiments, HFO-1234yf is provided in an amount at or greater than about 50 weight percent and the co-monomer(s), individually or collectively, may be in an amount at or less than about 50 weight percent.

The polymers of the present invention may be provided above or may be included within a coating composition having one or more additives. With respect to the latter, in particular, additives may be provided to improve one or more characteristics of the composition, particularly an aspect of the composition associated with its use. By way of non-limiting example, silica and/or silica- or carbon-based nano-particules may be provided to change surface energy and refractive index of the composition. Additional additives may be provided to assist with insulation of the coating, anti-corrosion, with hydrophobicity, therapeutic effects, substrate bonding or adhesion, or the like. Such additives may include, but are not limited to, high- or low-temperature additives, fillers, pigments - depending on need and the polymers used, saturants, lubricants, tackifiers, adhesion promoters, film-formers, thickeners, processing aids, electrically conductive materials, electrically insulative materials, stabilizers, impact modifiers, viscosity modifiers, or any other additive that improves one or more of the properties herein or is otherwise compatible with the HFO-1234yf polymer. Specific examples of additives, where applicable, are provided below with the respective uses. One of skill in the art will appreciate, however, that the present invention is not limited to such additives generally or with each composition and that these or any composition of the present invention may be modified to include one or more additives otherwise known or may be useful for the purpose provided.

The coating compositions may be applied to the surface of a substrate using any method known in the art. In one aspect, the polymer and, optionally, additives are dispersed in a solution with an organic solvent or mixture of solvents. Solvents that may be used in the coating application process are preferably, though not exclusively, polar, apriotic solvents. Examples of such solvents include, but are not limited to, ethyl acetate, acetone, tetrahydrofuran or mixtures thereof. The amount of solvent used to form the coating solution can be varied such that the HFO-1234yf polymer concentration can range from about 1 to about 99 weight percent, from about 1 to about 75 weight percent, from about 1 to about 50 weight percent, from about 1 to about 25 weight percent, from about 1 to about 10 weight percent, in certain preferred embodiments from about 1 to about 5 weight percent. Polymer amounts may be varied depending upon the application method and/or performance requirements.

In some embodiments, there may be manufacturing advantages to forming a coating concentrate, followed by diluting to the desired coating concentration. In alternate embodiments, dilution could occur prior to or during the initial mixing stage. Regardless of the concentration, the final solution can then be applied to the surface of the substrate using standard means known in the art such as, but not limited to, dipping, immersing, spin-in, slot die, spraying, pouring, rolling, brushing, or other coating techniques.

Post-application, the coating is allowed to dry or cure to form the coating layer of a desired thickness. The coating may optionally be subjected to a heat curing step, which may range from about 50° C to about 350° C, from about 50° C to about 325° C, or from about 50° C to about 250° C. Curing may be carried out for any length of time necessary to form the coating layer. In certain aspects, it may be between 1 minute and about 12 hours, 1 minute and about 1 hour, or from about 1 minute to about 15 minutes. The resulting coating may be, according to certain embodiments, non-porous, and the final coating composition comprises the 1234yf polymer (or co-polymer) in an amount at or greater than 10 wt. %, at or greater than 25 wt. %, at or greater than 50 wt. %, at or greater than 75 wt. %, at or greater than 90 wt. %, or at or greater than 99 wt. %.

In alternative embodiments, the polymer may be incorporated into and/or applied in conjunction with a polymeric substrate film, such as a paint or other polymeric-base film-forming substrate. In certain aspects, the polymer is suspended within the substrate film. In other embodiments, the substrate film is a polymer with functional elements that compatibly promote the bonding or cross-linking of the film with the 1234yf-containing polymeric compound or composition of the present invention. Such functional groups may be selected from carboxylic acid, sulfonic acid, aziridine, anhydride, amine, isocyanate, melamine, epoxy, hydroxyl, combinations thereof, or any functional groups that can compatibly interact with or otherwise cross-link with the 1234yf containing polymer of the present invention. In certain aspects, the substrate film is formed from one or more materials selected from polyesters, polyester urethanes, polycarbonates, polycarbonate urethanes, acrylics, acrylic polyurethanes, polyethers, polyether urethanes, ethylene vinyl alcohol copolymers, ethylene vinyl alcohol copolymer urethanes, polyamides, polyamide urethanes, polyamide ureas, polyacrylamides, polyacrylamide urethanes and combinations thereof.

The coating composition with the film-former is then applied to the surface of the substrate using standard means known in the art such as, but not limited to, dipping, immersing, spin-in, slot die, spraying, pouring, rolling, brushing, or other coating techniques. Post-application the coating is allowed to dry or cure using any methods defined herein or otherwise as is known in the art to form the coating layer of a desired thickness. One or multiple coating layers may be provided to the surface of the substrate.

Amounts of the 1234yf-containing polymer in such compositions may be in any embodiment provided herein. In certain embodiments, however, the HFO-123yf containing polymer is provided as at least 10 weight percent, at least 25 weight percent, or at least 50 weight percent of the composition.

Additional additives may be provided in such film-fonning compositions including, but not limited to pigments, fillers, or other additives provided herein or typically associated with similar types of coating compositions.

In alternative application methods, the polymer may be applied to the surface of a substrate by hot melt press, or may be extruded with the substrate. In further, or alternative embodiments, the devices or articles of the present invention may be manufactured such that the polymer or polymer compositions of the present invention are imbedded or impregated into a surface of the device or the device is otherwise manufactured to contain the HFO-1234yf containing polymer therein. Standard means or methods of impregnating or imbedding such a polymer may be provided. Additional application methods other than the foregoing will be readily apparent to one of skill in the art.

In certain embodiments of the invention, such as when the surface to be coated is a metal, it may be necessary to pre-treat the surface of the article to improve or facilitate bonding of the coating composition to the surface. In one non-limiting aspect, the surface may be pre-treated with one or a mixture of oxidation or oxidizing compounds or an oxidation method, which oxidizes the surface. Non-limiting embodiments of such compounds include, but are not limited to, chrome, manganese, functionalized silanes or the like. Methods of oxidizing the surface include plasma etching, sand blasting, or the like. Such oxidation increases bonding of the composition to the substrate surface, particularly the bonding of the polymer to the surface.

In alternative embodiments, an initial coating of a primary bonding layer and/or adhesive is provided on the surface of the article to provide a surface upon which the coating composition can bind. Example of compounds that may be used in such a binding layer include, but are not limited to a silicone or silicone based substrate or phosphorous or phosphorous-based substrate (e.g. phosphates, phosphites, etc.), or any compound which bonds to the surface of the substrate and facilitates bonding of the presently coating composition thereto.

One of skill in the art will readily appreciate that the present invention is not limited to the foregoing embodiments. The follow provides specific, but non-limiting, examples of such coating compositions and how they may be used.

### MEDICAL

In one aspect, the polymeric compositions and/or coating compositions may be used in therapeutic applications, including in clinical therapy, and, in certain aspects, such devices and articles which are intended to be used for short-term or extended periods of time in contact with portions of the human body, including, for example, bodily tissue, internal organs, vessels, arteries, blood cells and the like. Examples of such devices include, but are not limited to, stents, catheters, endoscopes or the like, guide wires, or similar devices for use on or within a body. In particular, such devices may include any medical device that is or may be coated with a polymeric material according to the present invention to aid in inhibition of platelets and/or other unwanted materials to the device or article.

In such applications, the device may be impregnated with the polymer composition and/or coated with a coating composition as provided in any of the embodiments described herein or otherwise apparent from the disclosure herein, including HFO-1234yf polymer amounts, ingredients, compositions, additives, application methods, etc. In certain preferred, but not limiting aspects, the polymer is a homopolymer of HFO-1234yf or is co-polymerized with at least one co-monomer, such as an alkene co-monomer or a halogenated alkene co-monomer. In further aspects, the co-monomer is a fluorinated alkene, and in further embodiments a fluorinated ethylene. In even further preferred embodiments, the co-monomer is vinylidene fluoride or vinylidene difluoride.

Amounts of HFO-1234yf and the co-monomer(s), if applicable, may be as provided above. That is, the HFO-1234yf may be provided in an amount between about 1 and about 99 weight percent and the co-monomer(s) between about 1 and about 99 weight percent. In further preferred embodiments, HFO-1234yf is provided in an amount between about 10 and about 90 weight percent and the co-monomer(s) between about 10 and 90 weight percent. In even further embodiments, HFO-1234yf is provided in an amount between about 30 and about 70 weight percent and the co-monomer(s) between about 30 and 70 weight percent. In embodiments where the co-monomer is a vinylidene fluoride or vinylidene difluoride, HFO-1234yf may be provided in an amount between about 10 and about 90 weight percent and the co-monomer(s) between about 10 and 90 weight percent, and preferably in an amount between about 50 and about 90 weight percent and the co-monomer(s) between about 10 and 50 weight percent.

In certain applications, for example, the polymer and/or coating composition may include one or more therapeutic additives, e.g. one or more pharmaceutical agents, biological agents, or genetic therapies for targeted delivery (luminally or otherwise) of these substances. Non-limiting examples of such substances may include anti-thrombogenic agents, anti-microbial agents (e.g. antibiotics, antiviral, anti-fungal, anti-parasitics, etc.), anti-septic agents, antiproliferative agents, anti-inflammatory agents, anti-neoplactic agents, anti-miotic agents, anesthetic agents, anti-coagulants, anti-oxidants, angiogenic agents, or any other therapeutic compound, substance, biologic, or agent otherwise known in the art. Such agents may be released during a procedure within the body or may be adapted for delayed release, particularly in embodiments where the device is intended for use in extended periods within the body. Again, such additives are not limiting to the invention, but provide additional embodiments to those otherwise described herein.

Non-limiting examples of other additives that may be included with such devices are provided herein and include, but are not limited to, high- or low-temperature additives or modifiers, fillers, or pigments, depending on need and the polymers used, saturants, lubricants, tackifiers, adhesion promoters, film-formers, thickeners, processing aids, electrically conductive materials, electrically insulative materials, stabilizers, impact modifiers, viscosity modifiers, or any other additives that are well known in the art for such uses.

Other applications under the medical device field may include the provision of a polymeric material according to the present invention as a coating, layer, thin film or the like: (1) on eye wear, preferably to provide, among other properties, anti-fogging to such articles; (2) controlled transport of fluids; (3) valve coating to yield a superhydrophobic article mimicking a microfluidic system; or (4) anti-staining coating, as might be applied, for example, in connection with dentures and other dental and orthodontic appliances and devices.

Again, in such embodiments, the polymer and/or coating compositions may be provided in any of the embodiments above or otherwise as apparent from the disclosure herein, including the amounts of HFO-1234yf present in the polymer, use of co-monomers, amount of the polymer present in the coating composition, additives, methods of application, and the like. In certain preferred, but not limiting aspects, the polymer is a homopolymer of HFO-1234yf or is co-polymerized with an alkene co-monomer or a halogenated alkene co-monomer. In further aspects, the co-monomer is a fluorinated alkene, and in further embodiments a fluorinated ethylene. In even further preferred embodiments, the co-monomer is vinylidene fluoride or vinylidene difluoride, and may be provided in the amounts described above.

### POWER (ENERGY) NETWORK

In another aspect, the present invention provides devices and articles used in the power and energy fields which are coated and/or impregnated with HFO-1234yf polymer and/or coating composition described herein. Particular examples of such devices and articles include articles and devices which are utilized, for example: (1) as a coating, film, or layer on power and information cables, signal devices, switches, connectors and the like, which might provide for example the advantage of increased, water, ice and/or chemical resistance to such devices and articles; (2) as a coating, film, or layer in fuel cell separators, lithium ion separators or cathode binding substrates; (3) plenum insulation; or (4) as a coating, film, or layer on wind generating equipment, including on the blades thereof, particularly in preferably as an anti-fouling and corrosion resistant coating, film or layer. Such a coating is advantageous for the reasons provided above, but have particularly applicability in this embodiment to insulating and protecting the surface of the article (both physically and chemically) from environmental conditions and surroundings.

The polymer and/or coating compositions may be provided in any of the embodiments above or otherwise apparent from the disclosure herein, including the amounts of HFO-1234yf present in the polymer, use of co-monomers, amount of the polymer present in the coating composition, additives, methods of application, and the like. In certain preferred, but non-limiting aspects, the polymer is a homopolymer of HFO-1234yf or is co-polymerized with one or more co-monomers, such as an alkene co-monomer or a halogenated alkene co-monomer. In further aspects, the co-monomer is a fluorinated and/or chlorinated alkene, and in further embodiments a fluorinated and/or chlorinated ethylene. In even further preferred embodiments, the co-monomer is vinylidene fluoride or vinylidene difluoride, or in further preferred embodiments the co-monomer includes chlorotrifluoroethylene (CTFE).

Amounts of HFO-1234yf and the co-monomer(s), if applicable, may be as provided above. That is, the HFO-1234yf may be provided in an amount between about 1 and about 99 weight percent and the co-monomer(s) between about 1 and about 99 weight percent. In further preferred embodiments, HFO-1234yf is provided in an amount between about 10 and about 90 weight percent and the co-monomer(s) between about 10 and 90 weight percent. In even further embodiments, HFO-1234yf is provided in an amount between about 30 and about 70 weight percent and the co-monomer(s) between about 30 and 70 weight percent. In embodiments where the co-monomer is a vinylidene fluoride, vinylidene difluoride, and/or CTFE, HFO-1234yf may be provided in an amount between about 10 and about 90 weight percent and the co-monomer(s) between about 10 and 90 weight percent, and preferably in an amount between about 50 and about 90 weight percent and the co-monomer(s) between about 10 and 50 weight percent.

The coating compositions may be provided with one or more additives typically used the power and energy fields, particularly the uses described above. Non-limiting examples of such additives are provided herein and include, but are not limited to, high- or low-temperature additives or modifiers, fillers, or pigments, depending on need and the polymers used, saturants, lubricants, tackifiers, adhesion promoters, film-formers, thickeners, processing aids, electrically conductive materials, electrically insulative materials, stabilizers, impact modifiers, viscosity modifiers, or any other additives that are well known in the art for such uses.

### AERONAUTICS

In another embodiment, the present invention provides devices and articles used in the field of aeronautics which are coated and/or impregnated with the 1234yf-containing polymer and/or coating composition described herein. Particular examples of such devices and articles include articles and devices which are utilized, for example: (1) as a coating, film, or layer on antenna, particularly and preferably as an anti-stick coating; or (2) as a coating, film, or layer on lift and/or air control surfaces of planes, helicopters and the like, particularly and preferably in certain embodiments as a film, coating or layer that provides ice resistance, drag reduction, electrostatic insulation (including as a coding for oxygen tanks), and as a coating on turbo fin surfaces.

The polymer and/or coating compositions may be provided in any of the embodiments above or otherwise apparent from the disclosure herein, including the amounts of HFO-1234yf present in the polymer, use of co-monomers, amount of the polymer present in the coating composition, additives, methods of application, and the like.

Where applicable, the coating compositions may be provided with one or more additives typically used in the aeronautics fields particularly the uses described above. Non-limiting examples of such additives are provided herein and include, but are not limited to, high- or low-temperature additives or modifiers, fillers, or pigments, depending on need and the polymers used, saturants, lubricants, tackifiers, adhesion promoters, film-formers, thickeners, processing aids, electrically conductive materials, electrically insulative materials, stabilizers, impact modifiers, viscosity modifiers, or any other additives that are well known in the art for such uses.

In aspects where the polymer of the present invention is applied as a coating, in certain preferred embodiments, the coating includes as an additive a polymeric substrate film, e.g. a paint or other polymeric-base film-forming substrate. As indicated above, in certain aspects, the polymer is suspended within the substrate film. In other embodiments, the substrate film is a polymer with functional elements that compatibly promote the bonding or cross-linking of the film with the 1234yf-containing polymeric compound or composition of the present invention. Such functional groups may be selected from carboxylic acid, sulfonic acid, aziridine, anhydride, amine, isocyanate, melamine, epoxy, hydroxyl, combinations thereof, or any functional groups that can compatibly interact with or otherwise cross-link with the 1234yf containing polymer of the present invention. Examples of such substrate films include those formed from one or more materials selected from polyesters, polyester urethanes, polycarbonates, polycarbonate urethanes, acrylics, acrylic polyurethanes, polyethers, polyether urethanes, ethylene vinyl alcohol copolymers, ethylene vinyl alcohol copolymer urethanes, polyamides, polyamide urethanes, polyamide ureas, polyacrylamides, polyacrylamide urethanes and combinations thereof.

Amounts of the 1234yf-containing polymer and film substrate included in such compositions may be in any embodiment provided herein. Additional additives that may be provided in such embodiments include, but are not limited to pigments, fillers, or other additives provided herein or typically associated with similar types of film-forming coating compositions.

Such compositions may be applied using any of the methods taught herein. In certain applications, however, it is applied to a surface of an article as a spray.

### MILITARY AND CONSUMER

In another embodiment, the present invention provides devices and articles used in the field of military articles and devices which are coated and/or impregnated with the 1234yf-containing polymer and/or coating composition described herein. Particular examples of such devices and articles include those which are utilized, for example: (1) as a coating, film, or layer on antenna, particularly and preferably as an anti-stick coating; or (2) as a coating, film, or layer on textiles, fabrics and the like, including on clothes and the like formed from such materials, preferably in certain embodiments as a film, coating or layer that provides water resistance, ballistic modification, and/or impact resistance.

In such applications, the polymer and/or coating composition may be provided in any of the embodiments above or as otherwise apparent from the disclosure herein, including HFO-1234yf polymer amounts and compositions, additives, application methods, etc. In certain preferred, but not limiting aspects, the polymer is a homopolymer of HFO-1234yf or is co-polymerized with one or more co-monomers. In further preferred aspects, the co-monomer includes at least one an acrylic or methacrylate ester of 4 to 24 carbon atoms, as provided herein.

Amounts of HFO-1234yf and the co-monomer(s), if applicable, may be as provided above. That is, the HFO-1234yf may be provided in an amount between about 1 and about 99 weight percent and the co-monomer(s) between about 1 and about 99 weight percent. In further preferred embodiments, HFO-1234yf is provided in an amount between about 10 and about 90 weight percent and the co-monomer(s) between about 10 and 90 weight percent. In even further embodiments, HFO-1234yf is provided in an amount between about 30 and about 70 weight percent and the co-monomer(s) between about 30 and 70 weight percent. In embodiments where the co-monomer is a acrylic or methyl acrylate, HFO-1234yf is provided in an amount between about 10 and about 90 weight percent and the co-monnmer(s) between about 10 and 90 weight percent, and preferably in an amount between about 50 and about 90 weight percent and the co-monomer(s) between about 10 and 50 weight percent.

The coating compositions may be provided with one or more additives typically used the military and consumer fields, particularly the uses described above. Non-limiting examples of such additives are provided herein and include, but are not limited to, high- or low-temperature additives or modifiers, fillers, or pigments, depending on need and the polymers used, saturants, lubricants, tackifiers, adhesion promoters, film-formers, thickeners, processing aids, electrically conductive materials, electrically insulative materials, stabilizers, impact modifiers, viscosity modifiers, or any other additives that are well known in the art for such uses.

### AUTOMOTIVE

In a further embodiment, the present invention provides devices and articles used in the automotive field on articles and devices which are coated and/or impregnated with the 1234yf-containing polymer and/or coating composition described herein. Particular examples of such devices and articles include articles and devices which are utilized, for example: (1) as a coating, film, or layer on tanks, containers and the like which contain working fluids, such as fuel, oil, anti-freeze and the like, preferably in certain embodiments to minimize residual fuel and/or to aid in separation of oil and water; (2) optical appliances, including mirrors and windshields, including to preferably provide a self cleaning feature; (3) vehicle exterior surfaces, including preferably to provide protection such as a clear coating; (4) interior surfaces, including preferably to provide protection such as water and stain resistance/repellancey; or (5) on wiper blades.

In such applications, the polymer composition and/or coating composition may be provided in any of the embodiments above or otherwise apparent from the disclosure herein, including HFO-1234yf polymer amounts and compositions, additives, application methods, etc. In certain preferred, but not limiting aspects, the polymer is a homopolymer of HFO-1234yf or is co-polymerized with one or more co-monomers. In further preferred aspects, the co-monomer includes at least one an acrylic or methacrylate ester of 4 to 24 carbon atoms., as provided herein.

Amounts of HFO-1234yf and the co-monomer(s), if applicable, may be as provided above. That is, the HFO-1234yf may be provided in an amount between about 1 and about 99 weight percent and the co-monomer(s) between about 1 and about 99 weight percent. In further preferred embodiments, HFO-1234yf is provided in an amount between about 10 and about 90 weight percent and the co-monomer(s) between about 10 and 90 weight percent. In even further embodiments, HFO-1234yf is provided in an amount between about 30 and about 70 weight percent and the co-monomer(s) between about 30 and 70 weight percent. In embodiments where the co-monomer is a acrylic or methyl acrylate, HFO-1234yf is provided in an amount between about 10 and about 90 weight percent and the co-monomer(s) between about 10 and 90 weight percent, and preferably in an amount between about 50 and about 90 weight percent and the co-monomer(s) between about 10 and 50 weight percent.

The coating compositions may be provided with one or more additives typically used the automotive fields, particularly the uses described above. Non-limiting examples of such additives are provided herein and include, but are not limited to, high- or low-temperature additives or modifiers, fillers, or pigments, depending on need and the polymers used, saturants, lubricants, tackifiers, adhesion promoters, film-formers, thickeners, processing aids, electrically conductive materials, electrically insulative materials, stabilizers, impact modifiers, viscosity modifiers, or any other additives that are well known in the art for such uses.

In certain further embodiments, particularly where the coating composition is applied to the exterior surface of a vehicle, the coating includes as an additive a polymeric substrate film, e.g. a paint or other polymeric-base film-forming substrate. As indicated above, in certain aspects, the polymer is suspended within the substrate film. In other embodiments, the substrate film is a polymer with functional elements that compatibly promote the bonding or cross-linking of the film with the 1234yf-containing polymeric compound or composition of the present invention. Such functional groups may be selected from carboxylic acid, sulfonic acid, aziridine, anhydride, amine, isocyanate, melamine, epoxy, hydroxyl, combinations thereof, or any functional groups that can compatibly interact with or otherwise cross-link with the 1234yf containing polymer of the present invention. Examples of such substrate films include those formed from one or more materials selected from polyesters, polyester urethanes, polycarbonates, polycarbonate urethanes, acrylics, acrylic polyurethanes, polyethers, polyether urethanes, ethylene vinyl alcohol copolymers, ethylene vinyl alcohol copolymer urethanes, polyamides, polyamide urethanes, polyamide ureas, polyacrylamides, polyacrylamide urethanes and combinations thereof.

Amounts of the 1234yf-containing polymer and film substrate included in such compositions may be in any embodiment provided herein. Additional additives may be provided in such compositions including, but not limited to pigments, fillers, or other additives provided herein or typically associated with similar types of coating compositions.

Such compositions may be applied using any of the methods taught herein. In certain applications, however, it is applied to a surface of an article as a spray.

In embodiments wherein the fluoropolymer is provided in wiper blade, it may be provided as a coating, but preferably is impregnated or otherwise provided within the mold of the wiper blade rubber. In certain aspects, and prior to molding, the rubber is provided as a liquid composition having dispersed therewithin the HFO-1234yf containing polymers of the present invention. The liquid composition is provided to the mold and allowed to cure using standard methods known in the art.

Coating compositions may also, or alternatively, be provided to the surface of the article using one or more of the means provided above, including, but not limited to, dipping, immersing, spin-in, slot die, spraying, pouring, rolling, brushing, or other coating techniques.

### ARCHITECTURAL

In further aspects, the present invention relates to devices and articles used in the architectural field on articles and devices which are coated and/or impregnated with the 1234yf-containing polymer and/or coating composition described herein. Particular examples of such devices and articles include those which are utilized, for example: as a coating, film, or layer to provide anti-soiling coating, graffiti resistant surfaces, self-cleaning windows, anti fog coatings (for any glass or plastic goggles or materials), cooling application, such as ice-cube trays or frost free coating for cooling appliances such as refrigerators, freezers and the like, as a scotch guard replacement, self cleaning urinals, sinks, and the like, on pots/pans and the like, preservation of building exterior, concrete additive, crack sealant, for example, as a material to be injected into cracks, fissures and the like to prevent water damage, for example during freeze/thaw cycles, as a window or door screen additive to prevent water from passing through the screen mesh, or similar applications.

The polymer and/or coating compositions may be provided in any of the embodiments above or otherwise apparent from the disclosure herein, including the amounts of HFO-1234yf present in the polymer, use of co-monomers, amount of the polymer present in the coating composition, additives, methods of application, and the like.

The coating compositions may be provided with one or more additives typically used the architectural fields, particularly the uses described above. Non-limiting examples of such additives are provided herein and include, but are not limited to, high- or low-temperature additives or modifiers, fillers, or pigments, depending on need and the polymers used, saturants, lubricants, tackifiers, adhesion promoters, film-formers, thickeners, processing aids, electrically conductive materials, electrically insulative materials, stabilizers, impact modifiers, viscosity modifiers, or any other additives that are well known in the art for such uses.

### MARINE

In another aspect, the present invention provides devices and articles used in the marine field on articles and devices which are coated and/or impregnated with the 1234yf-containing polymer and/or coating composition described herein. Particular examples of such devices and articles include articles and devices which are utilized, for example: as a coating, film, or layer to provide vessel (e.g. boat) drag reduction, marine fouling protection (barnacle, zebra mussel etc.),sheer reduction, fluidic drag reduction, buoyancy, anti-corrosion coating, bilge treatment for oil/water separation, enhance floating force, and the like.

In such embodiments, the polymer and/or coating compositions may be provided in any of the embodiments above or otherwise apparent from the disclosure herein, including the amounts of HFO-1234yf present in the polymer, use of co-monomers, amount of the polymer present in the coating composition, additives, methods of application, and the like. In certain preferred, but not limiting aspects, the polymer is a homopolymer of HFO-1234yf or is co-polymerized with one or more co-monomers, such as an alkene co-monomer or a halogenated alkene co-monomer. In further aspects, the co-monomer is a fluorinated alkene, and in further embodiments a fluorinated ethylene. In even further preferred embodiments, the co-monomer is vinylidene fluoride or vinylidene difluoride.

Amounts of HFO-1234yf and the co-monomer(s), if applicable, may be as provided above. That is, the HFO-1234yf may be provided in an amount between about 1 and about 99 weight percent and the co-monomer(s) between about 1 and about 99 weight percent. In further preferred embodiments, HFO-1234yf is provided in an amount between about 10 and about 90 weight percent and the co-monomer(s) between about 10 and 90 weight percent. In even further embodiments, HFO-1234yf is provided in an amount between about 30 and about 70 weight percent and the co-monomer(s) between about 30 and 70 weight percent. In embodiments where the co-monomer is a vinylidene fluoride or vinylidene difluoride, HFO-1234yf is provided in an amount between about 10 and about 90 weight percent and the co-monomer(s) between about 10 and 90 weight percent, and preferably in an amount between about 50 and about 90 weight percent and the co-monomer(s) between about 10 and 50 weight percent.

The coating compositions may be provided with one or more additives typically used the marine fields, particularly the uses described above. Non-limiting examples of such additives are provided herein and include, but are not limited to, high- or low-temperature additives or modifiers, fillers, or pigments, depending on need and the polymers used, saturants, lubricants, tackifiers, adhesion promoters, film-formers, thickeners, processing aids, electrically conductive materials, electrically insulative materials, stabilizers, impact modifiers, viscosity modifiers, or any other additives that are well known in the art for such uses.

In aspects where the polymer of the present invention is applied as a coating, in certain preferred embodiments, the coating includes, as at least one additive, a polymeric substrate film, e.g. a paint or other polymeric-base film-forming substrate. As indicated above, in certain aspects, the polymer is suspended within the substrate film. In other embodiments, the substrate film is a polymer with functional elements that compatibly promote the bonding or cross-linking of the film with the 1234yf-containing polymeric compound or composition of the present invention. Such functional groups may be selected from carboxylic acid, sulfonic acid, aziridine, anhydride, amine, isocyanate, melamine, epoxy, hydroxyl, combinations thereof, or any functional groups that can compatibly interact with or otherwise cross-link with the 1234yf containing polymer of the present invention. Examples of such substrate films include those formed from one or more materials selected from polyesters, polyester urethanes, polycarbonates, polycarbonate urethanes, acrylics, acrylic polyurethanes, polyethers, polyether urethanes, ethylene vinyl alcohol copolymers, ethylene vinyl alcohol copolymer urethanes, polyamides, polyamide urethanes, polyamide ureas, polyacrylamides, polyacrylamide urethanes and combinations thereof.

Amounts of the 1234yf-containing polymer and film substrate included in such compositions may be in any embodiment provided herein. Additional additives may be provided in such compositions including, but not limited to pigments, fillers, or other additives provided herein or typically associated with similar types of coating compositions. Other additives commonly used to coat marine vessels may also be included, as provided above.

Such compositions may be applied using any of the methods taught herein. In certain applications, however, it is applied to a surface of an article as a spray.

### ELECTRICAL

In further aspects, the present invention provides devices and articles used in the electrical field on articles and devices which are coated and/or impregnated with the 1234yf containing polymer and/or coating composition described herein. Particular examples of such devices and articles include articles and devices which are utilized, for example as a coating, film, or layer on piezo electronic devices, ferroelectric devices, opto-electronics and the like, wherein the coating composition, at least in part, provides an electrical charge or current that is associated with the device or article. Non-limiting examples of such devices include, but are not limited to, light switches or sensors and detectors such as road markings and traffic sensors, vibration sensors, acceleration detectors, and the like.

In such embodiments, the polymer and/or coating compositions may be provided in any of the embodiments above or otherwise apparent from the disclosure herein, including the amounts of HFO-1234yf present in the polymer, use of co-monomers, amount of the polymer present in the coating composition, additives, methods of application, and the like. In certain preferred, but not limiting aspects, the polymer is a homopolymer of HFO-1234yf. In alternative embodiments, the polymer may also be co-polymerized with one or more co-monomers, such as an alkene co-monomer or a halogenated alkene co-monomer. In further aspects, the co-monomer is a fluorinated alkene, and in further embodiments a fluorinated ethylene. In even further preferred embodiments, the co-monomer is vinylidene fluoride or vinylidene difluoride.

Amounts of HFO-1234yf and the co-monomer(s), if applicable, may be as provided above. That is, the HFO-1234yf may be provided in an amount between about 1 and about 99 weight percent and the co-monomer(s) between about 1 and about 99 weight percent. In further preferred embodiments, HFO-1234yf is provided in an amount between about 10 and about 90 weight percent and the co-monomer(s) between about 10 and 90 weight percent. In even further embodiments, HFO-1234yf is provided in an amount between about 30 and about 70 weight percent and the co-monomer(s) between about 30 and 70 weight percent. In embodiments where the co-monomer is a vinylidene fluoride or vinylidene difluoride, HFO-1234yf is provided in an amount between about 10 and about 90 weight percent and the co-monomer(s) between about 10 and 90 weight percent, and preferably in an amount between about 50 and about 90 weight percent and the co-monomer(s) between about 10 and 50 weight percent.

The polymer and/or coating compositions may be provided in any of the embodiments above or otherwise apparent from the disclosure herein, including the amounts of HF4-1234yf present in the polymer, use of co-monomers, amount of the polymer present in the coating composition, additives, methods of application, and the like.

The coating compositions may be provided with one or more additives typically used the electrical fields, particularly the uses described above. Non-limiting examples of such additives are provided herein and include, but are not limited to, high- or low-temperature additives or modifiers, fillers, or pigments, depending on need and the polymers used, saturants, lubricants, tackifiers, adhesion promoters, film-formers, thickeners, processing aids, electrically conductive materials, electrically insulative materials, stabilizers, impact modifiers, viscosity modifiers, or any other additives that are well known in the art for such uses.

### GENERIC APPLICATIONS

In further aspects, the present invention provides devices and articles used in general applications on articles and devices where a coating and/or impregnation with the 1234yf-containing polymer and/or coating composition described herein is desired. Particular examples of such devices and articles include articles and devices which are utilized, for example as (1) dry film lubrication; (2) friction reduction; (3) mold release; (4) foul release; (5) iceophobic applications for steel, stainless steel, fiberglass, aluminum and the like; (6) most painted surfaces; (7) flat panel displays such as computer screens, cell phone screens, touch pads, i-pod and the like; (8) consumer application such as cosmetics, hair spray, hair styling products, nail polish, carpets and fabrics, and the preparation of a variety of elastomers i.e. co-polymers and the like; or (9) applications for using the coating to produce hydrophobic mesh.

The polymer and/or coating compositions may be provided in any of the embodiments above or otherwise apparent from the disclosure herein, including the amounts of HFO-1234yf present in the polymer, use of co-monomers, amount of the polymer present in the coating composition, additives, methods of application, and the like.

The coating compositions may be provided with one or more additives typically used with such applications, particularly the applications provided above. Non-limiting examples of such additives are provided herein and include, but are not limited to, high- or low-temperature additives or modifiers, fillers, or pigments, depending on need and the polymers used, saturants, lubricants, tackifiers, adhesion promoters, film-formers, thickeners, processing aids, electrically conductive materials, electrically insulative materials, stabilizers, impact modifiers, viscosity modifiers, or any other additives that are well known in the art for such uses.

The following non-limiting examples serve to illustrate certain embodiments of the invention but are not to be construed as limiting. Variations and additional or alternative embodiments will be readily apparent to the skilled artisan on the basis of the disclosure provided herein.

### EXAMPLES

### EXAMPLE 1

This example is presented to illustrate the usefulness of treating automotive glass with the 1234yf polymer. An observed increase in the contact angle would imply that there is an increase in the hydrophobic nature of the surface and consequently a reduced surface energy, allowing for example dirt and/or water to be easily removed without the use of a wiper blade.

A poly-1234yf solution is prepared by dissolving 25g of the 1234yf polymer in 475g of ethyl acetate to produce a 5 wt% solution. This treatment solution is applied to the windshield by sprat coating to give a thin uniform polymer coat on the surface of this glass. The glass windshield is heated to 50°C for 1 hour to ensure that any residual solvent that remains is removed. The contact angle of the resulting clear coating is measured using a Rame-Hart contact angle instrument. The contact angle increases from 80° for the untreated surface to 100° for the polymer treated surface.

### EXAMPLE 2

This example is used to illustrate the usefulness of the 1245yf polymer in architectural coatins as they may apply for example to architectural anti-graffiti resistant surfaces.

A solution of the 1234yf polymer to be used as the coating solution is prepared by dissolving 50 g of the 1234yf polymer in 950g of ethyl acetate to produce a 5 wt% solution. Using a paint roller, a thin layer of the polymer solution is applied to a concrete block. After 1h, a second coat of the polymer solution is applied by rolling in a pattern that is perpendicular to the first applied coating. The coating is dried overnight. A random graffiti pattern of acrylic paint is applied to the concrete block and dried at outside ambient conditions for 3 days (75-80°F). The concrete block is subjected to cleaning using a typical industrial pressure water cleaner. The graffiti message was completely removed.

### EXAMPLE 3

This example is presented to illustrate the usefulness of the 1234yf polymer coating in marine applications. The buildup of biofouling on marine vessels poses a significant problem. In some instances the hull structure and the propulsion systems can become damaged. Over time, the accumulation of biofoulers on hulls can increase both the hydrodynamic volume of the vessel and the frictional effects leading to increased drag. A lower surface energy as indicated by an increase in the contact angle of a treated substrate would be an indication of the effectiveness of the applied coating in reducing biofouling.

A 5 wt% solution containing the 1234yf polymer is prepared as described above. The solution is then applied to a sheet metal block by spray coating. After drying overnight the contact angle of the steel is measured and compared to the untreated metal. The untreated steel has a contact angle of 85°. After treating, the contact angle is increased to 111° indicating that the surface energy has decreased and is becoming a non-stick surface.

### EXAMPLE 4

This example is presented to illustrate the general application of films as release agents. For the purposes of this example, a mold release agent is a release agent that prevents the adherence of a substance to the forming surfaces used to fabricate an article from that substance. A plywood box, 1 ft3 in dimensions is coated with a 5% poly-1234yf/ethyl acetate solution as described in Example 2. The coating is applied with the use of a roller. After drying the form for 1 hour at 50 °C, a cement slurry is poured into the mold. After it has begun to set, the plywood frame is removed without any adherence of the cement to the wood. There is no degradation to the wooden for as it is used to form additional cement blocks which do not adhere to the wooden form..

### EXAMPLE 5

This example is presented to illustrate the usefulness of treating stents with the 1234yf polymer. An observed increase in the contact angle would imply that there is an increase in the hydrophobic nature of the surface and consequently a reduced surface energy, allowing for example microbes to not become attached and the coating also protects against corrosion.

Vascular stents made of magnesium metal are electropolished using an applied potential of 3V for 10-20 second in a solution of 3 parts of phosphoric acid and 5 parts of 95% ethanol, followed by drying in hot air. Stents are further coated with 5 wt% poly-1234yf solution by immersion then dried at 150 °C for 1 hour. The 5 wt % solution is prepared by dissolving 25g of the 1234yf polymer in 475g of ethyl acetate. The stents have a high surface energy and are protected from corrosion.

### EXAMPLE 6

This example is presented to illustrate the usefulness of treating windmill blades with the 1234yf polymer. An observed increase in the contact angle would imply that there is an increase in the hydrophobic nature of the surface and consequently a reduced surface energy, allowing for example for example dirt and/or water to be easily removed.

A poly-1234yf solution is prepared by dissolving 25g of the 1234yf polymer in 475g of ethyl acetate to produce a 5 wt% solution. This treatment solution is applied to the windmill turbine blade by spray coating to give a thin uniform polymer coat on the surface. The blade is heated to 50°C for 1 hour to ensure that any residual solvent that remains is removed. The contact angle of the resulting clear coating is measured using a Rame-Hart contact angle instrument. The contact angle increases from 80° for the untreated surface to 100° for the polymer treated surface.

### EXAMPLE 7

This example is presented to illustrate the usefulness of treating antennas with the 1234yf polymer. An observed increase in the contact angle would imply that there is an increase in the hydrophobic nature of the surface and consequently a reduced surface energy, allowing for example for example snow and/or ice to be easily removed from the antenna. The coating also protects telecommunications equipment from snow, ice, and rain interference.

A poly-1234yf solution is prepared by dissolving 25g of the 1234yf polymer in 475g of ethyl acetate to produce a 5 wt% solution. This treatment solution is applied to the dish antenna by spray coating to give a thin uniform polymer coat on the surface. The antenna is heated to 50°C for 1 hour to ensure that any residual solvent that remains is removed. The contact angle of the resulting clear coating is measured using a Rame-Hart contact angle instrument. The contact angle increases from 80° for the untreated surface to 100° for the polymer treated surface.

### EXAMPLE 8

This example is presented to illustrate the usefulness of treating textiles with the 1234yf polymer. An observed increase in the contact angle would imply that there is an increase in the hydrophobic nature of the surface and consequently a reduced surface energy, allowing for example dirt and/or water to be easily removed.

A poly-1234yf solution is prepared by dissolving 25g of the 1234yf polymer in 475g of ethyl acetate to produce a 5 wt% solution. This treatment solution is applied to the cloth by dipping the textile into the polymer solution to give a thin uniform film on the surface. The cloth is air dried for 1 hour to ensure that any residual solvent that remains is removed. The contact angle of the resulting clear coating is measured using a Rame-Hart contact angle instrument. The contact angle increases from 80° for the untreated surface to 100° for the polymer treated surface.

### EXAMPLE 9

This example is presented to illustrate the piezoelectric effect of 1234yf polymer. Piezoelectric polymers exhibit an unusual effect-when physically deformed, they generate an electric charge. The reverse is also true, if an electric charge is applied to the polymer, it will change shape slightly. Piezos are used in a wide range of applications, most often as a sensor to detect movement or pressure. Examples include bump sensors in a pinball machines, traffic sensors in a road, vibration sensors, and acceleration detectors.

A required amount of the 1234yf polymer is pressed into sheets of different thicknesses (0.1 to 1. 5 mm) by compression molded in a press at 220 °C using spacers of appropriate thicknesses and is quenched to room temperature at a rate of about: 50 °C/min. Pieces about 2 cm wide and 6 cm long are cut from the stretched film and rolled with a pair of steel rollers (diameter 9 cm, roller speed about 20 rpm) in several steps until a desired reduction in thickness is obtained. Rolling is accomplished at temperatures ranging from 20 °C to 100 °C, with a wider range being possible. Rolling caused an increase in the width but a slight decrease in the length, the amounts of which depended on the degree of thickness reduction (e. g. , the width increases by about 50 percent and the length decreases by about 9 percent when the thickness is reduced by about 30 percent). After the rolling process, the films are annealed at elevated temperatures (100 to 160 °C) for varying lengths of time. The annealing is also accomplished under a light pressure (ca. 20 MPa) in order to remove wrinkles.

### Piezoelectric Measurements

The films prepared in the above Example, are cleaned thoroughly with trichloroethane, rinsed in distilled water and metallized with 1000 Angstrom-thick layers of aluminum on both sides by vacuum deposition. Samples are poled at 90 °C for one hour under a biased dc field in the range of 400 to 550 KV/crri, and cooled with the field on. The film is then annealed at 60 °C for one hour under short-circuit conditions in order to more rapidly stabilize the film for measurement purposes. Piezoelectric measurements are peformed at room temperature using a Rheovibron viscoelastometer to impose a sinusoidal elongational strain at 110 Hz. The poled film, typically about 5 cm x 0. 5 cm x 60 microns in size, is held between two metallic grips, which are insulated from the metallized film using pieces of paper. Charge or current outputs are picked up from the two grip arms with thin copper wires (diameter 65 microns) attached to the arms with a silver paste, and monitored with a digital voltmeter afer being fed through a current amplifier (Keithly 427) and a lock-in amplifier (Princeton Applied Research PAR 124). The latter films display modest amounts of piezoelectricity (di3 about 0.02 to 0.1 picocoulombs/Newton).

### Numbered Embodiments:

The subject matter encompassed by the following numbered embodiments also forms part of the present invention, optionally in combination with the subject matter described above and/or defined in the claims.
Numbered Embodiment 1
   A polymer composition comprising;
   a fluoropolymer comprising polymerized monomers of 2,3,3,3-tetrafluoropropene (HFO-1234yf) and having a surface tension of no greater than 30 mN/m.
Numbered Embodiment 2
   The polymer composition of numbered embodiment 1, wherein the surface tension is between about 15 mN/m and about 30 mN/m.
Numbered Embodiment 3
   A coating composition comprising;
   a fluoropolymer comprising polymerized monomers of 2,3,3,3-tetrafluoropropene (HFO-1234yf) and having a surface tension of no greater than 30 mN/m.
Numbered Embodiment 4
   The coating composition of numbered embodiment 3, wherein the surface tension is between about 15 mN/m and about 30 mN/m.
Numbered Embodiment 5
   The coating composition of numbered embodiment 3, wherein the fluoropolymer further comprises one or more co-monomers.
Numbered Embodiment 6
   The coating composition of numbered embodiment 5, wherein the co-monomer is fluorinated.
Numbered Embodiment 7
   The coating composition of numbered embodiment 6, wherein the fluorinated co-monomer is represented by the formula: R¹R²**C=CR**³R⁴wherein each of R¹, R², R³, and R⁴ is independently selected from hydrogen, chloro, fluoro, hydroxy, alkoxy, alkoxycarbonyl, acyl, cyano, linear, branched or cyclic alkyl of 1-6 carbon atoms optionally substituted by at least one fluorine, aryl of 1-6 carbon atoms optionally substituted by at least one fluorine, with the proviso that at least one of the R¹, R², R³, and R⁴ groups is either fluorine or a fluorine-containing group, and a mixture thereof.
Numbered Embodiment 8
   The coating composition of numbered embodiment 6, wherein the fluorinated co-monomer is selected from the group consisting of **CFH=CH**₂, CF₂**=CH**₂, CF₂**=CFH**, **CF**₂**=CF**₂, **CCIF=CF**₂, **CBrF=CF**₂, CF₃**CH=CHF**, **CF**₃**CF=CF**₂, CF₃**CH=CF**₂, cis-CF₃**CF=CHF**, **trans**-CF₃**CF=CHF**, **CF**₃**CH=CH**₂**,** CF₃**CF**=**CH**₂**,** CF₃CF₂**CF=CF**₂, CF₃CF₂**CH=CF**₂, CF₃CF₂**CF=CHF**, CF₃CF₂**CH=CH**₂, CF₃CF₂**CF=CH**₂, CF₃CF₂CF₂**CF=CF**₂, CF₃CF₂CF₂**CH=CF**₂, CF₃CF₂CF₂**CF=CHF**, CF₃CF₂CF₂**CH=CH**₂, CF₃CF₂CF₂**CF=CH**₂, CF₃**CH=CHCF**₃, CF₃**CH=CFCF**₃, CF₃**CF=CFCF**₃, HOCH₂**CH=CHF**, **HOCH**₂**CH=CF**₂, HOCH₂**CF=CH**₂, HOCH₂**CF=CHF**, **HOCH**₂**CF=CF**₂, HOCH₂**CF=CH**₂, CF₃**CH=CHCl**, **CF**₃**CCl=CH**₂, CF₃**CCl=CHF**, **CF**₃**CCl=CF**₂, CF₃**CF=CHCl**, CF₃**CH=CFCl**, (CF₃)₂**C=CH**₂, CF₃CF₂CF₂CF₂**CH=CH**₂, CF₃CF₂CF₂**OCF=CF**₂, CF₃OCF=CF₂, CF₃CF₂CF₂CF₂**CH=CH**₂, and mixtures thereof.
Numbered Embodiment 9
   The coating composition of numbered embodiment 6, wherein the fluorinated co-monomer comprises vinylidene fluoride.
Numbered Embodiment 10
   The coating composition of numbered embodiment 6, wherein the fluorinated co-monomer comprises vinylidene difluoride.
Numbered Embodiment 11
   The coating composition of numbered embodiment 6, wherein the fluorinated co-monomer comprises chlorotrifluoroethylene.
Numbered Embodiment 12
   The coating composition of numbered embodiment 5, wherein the co-monomer is non-fluorinated
Numbered Embodiment 13
   The coating composition of numbered embodiment 12, wherein the non-wherein said non-fluorinated comonomer is selected from the group consisting of: an alkene of 2-8 carbon atoms, acrylate or methacrylate ester of 4 to 24 carbon atoms, hydroxyethyl acrylate or methacrylate, hydroxypropyl acrylate or methacrylate, glycidyl acrylate or methacrylate, acrylonitrile, methacrylonitrile, vinyl ether of 4 to 24 carbon atoms optionally substituted by at least one hydroxy group, styrene, alpha-methylstyrene, paramethyl styrene, allyl alcohol, methallyl alcohol, vinyl acetate, vinyl carboxylate of 5-24 carbon atoms wherein the carboxylate is optionally substituted by at least one hydroxy group, methyl ethyl ketone, hydroxyethyl vinyl ether, hydroxybutyl vinyl ether, alkyl vinyl ether, and combinations thereof.
Numbered Embodiment 14
   The coating composition of numbered embodiment 12, wherein the non-fluorinated co-monomer comprises an acrylic or derivative thereof.
Numbered Embodiment 15
   The coating composition of numbered embodiment 12, wherein the non-fluorinated co-monomer comprises an acrylate or methacrylate ester of 4 to 24 carbon atoms.
Numbered Embodiment 16
   The coating composition of numbered embodiment 12, wherein the non-fluorinated co-monomer is selected from the group consisting of hydroxyethyl acrylate or methacrylate, hydroxypropyl acrylate or methacrylate, glycidyl acrylate, methacrylate, and combinations thereof.
Numbered Embodiment 17
   The coating composition of numbered embodiment 5, wherein HFO-1234yf is provided in the fluoropolymer in an amount between about 1 and about 99 weight percent and the co-monomer(s) between about 1 and about 99 weight percent.
Numbered Embodiment 18
   The coating composition of numbered embodiment 5, wherein HFO-1234yf is provided in the fluoropolymer in an amount between about 10 and about 90 weight percent and the co-monomer(s) between about 10 and 90 weight percent.
Numbered Embodiment 19
   The coating composition of numbered embodiment 5, wherein HFO-1234yf is provided in the fluoropolymer in an amount between about 30 and about 70 weight percent and the co-monomer(s) between about 30 and 70 weight percent.
Numbered Embodiment 20
   The coating composition of numbered embodiment 5, wherein HFO-1234yf is provided in the fluoropolymer in an amount at or greater than about 50 weight percent and the co-monomer(s) in an amount at or less than about 50 weight percent.
Numbered Embodiment 21
   The coating composition of numbered embodiment 3, further comprising one or more additives selected from the group consisting of silica, carbon- or silica-based nano-particules, therapeutic agents or compounds, high- or low-temperature additives, fillers, pigments, saturants, lubricants, tackifiers, adhesion promoters, film-formers, thickeners, processing aids, electrically conductive materials, electrically insulative materials, stabilizers, impact modifiers, viscosity modifiers, and combinations thereof.
Numbered Embodiment 22
   A method for applying a coating composition to a surface of a substrate
   comprising;
   dispersing in a polar, apriotic solvent a fluoropolymer composition comprising 2,3,3,3-tetrafluoropropene (HFO-1234yf) to form a solution;
   applying the solution to a surface of a substrate; and
   curing or drying the solution.
Numbered Embodiment 23
   The method of numbered embodiment 22, wherein the polar, apriotic solvent is selected from the group consisting of ethyl acetate, acetone, tetrahydrofuran or mixtures thereof.
Numbered Embodiment 24
   The method of numbered embodiment 22, wherein the fluoropolymer concentration in the solution is between about 1 to about 50 weight percent.
Numbered Embodiment 25
   The method of numbered embodiment 22, wherein the fluoropolymer concentration in the solution is between about 1 and about 25 weight percent.
Numbered Embodiment 26
   The method of numbered embodiment 22, wherein the fluoropolymer concentration in the solution is between about 1 to about 10 weight percent.
Numbered Embodiment 27
   The method of numbered embodiment 22, wherein the fluoropolymer concentration in the solution is between about 1 to about 5 weight percent.
Numbered Embodiment 28
   The method of numbered embodiment 22, wherein the cured coating composition comprises the fluoropolymer in an amount at or greater than 10%.
Numbered Embodiment 29
   The method of numbered embodiment 22, wherein the cured coating composition comprises the fluoropolymer in an amount at or greater than 25%.
Numbered Embodiment 30
   The method of numbered embodiment 22, wherein the cured coating composition comprises the fluoropolymer in an amount at or greater than 50%.
Numbered Embodiment 31
   The method of numbered embodiment 22, wherein the cured coating composition comprises the fluoropolymer in an amount at or greater than 75%.
Numbered Embodiment 32
   The method of numbered embodiment 22, wherein the cured coating composition comprises the fluoropolymer in an amount or at or greater than 90%.
Numbered Embodiment 33
   The method of numbered embodiment 22, wherein, prior to applying the solution to the surface, the surface is pretreated with at least one oxidizing agent.
Numbered Embodiment 34
   The method of numbered embodiment 22, wherein, prior to applying the solution to the surface, the surface is pretreated with at least one adhesion promoting agent.
Numbered Embodiment 35
   A film-forming coating composition comprising:
   a film-forming substrate; and
   a fluoropolymer comprising polymerized monomers of 2,3,3,3-tetrafluoropropene (HFO-1234yf).
Numbered Embodiment 36
   The film-forming coating composition of numbered embodiment 35, wherein the film-forming substrate compatibly promotes bonding or cross-linking with one or more functional elements of the fluoropolymer.
Numbered Embodiment 37
   The film-forming coating composition of numbered embodiment 35, wherein the film-forming substrate is formed from one or more materials selected from the group consisting of polyesters, polyester urethanes, polycarbonates, polycarbonate urethanes, acrylics, acrylic polyurethanes, polyethers, polyether urethanes, ethylene vinyl alcohol copolymers, ethylene vinyl alcohol copolymer urethanes, polyamides, polyamide urethanes, polyamide ureas, polyacrylamides, polyacrylamide urethanes and combinations thereof.
Numbered Embodiment 38
   The film-forming coating composition of numbered embodiment 35, wherein the fluoropolymer is provided in an amount of at least 10 weight percent of the film-forming coating composition.
Numbered Embodiment 39
   The film-forming coating composition of numbered embodiment 35, wherein the fluoropolymer is provided in an amount of at least 25 weight percent of the film-forming coating composition.
Numbered Embodiment 40
   The film-forming coating composition of numbered embodiment 35, wherein the fluoropolymer is provided in an amount of at least 50 weight percent of the film-forming coating composition.
Numbered Embodiment 41
   The film-forming composition of numbered embodiment 35, further comprising one or more additives.
Numbered Embodiment 42
   The film-forming composition of numbered embodiment 41, wherein at least one additive is selected from the group consisting of silica, carbon- or silica-based nano-particules, therapeutic agents or compounds, high- or low-temperature additives, fillers, pigments, saturants, lubricants, tackifiers, adhesion promoters, film-formers, thickeners, processing aids, electrically conductive materials, electrically insulative materials, stabilizers, impact modifiers, viscosity modifiers, and combinations thereof.

## Claims

1. A film-forming coating composition comprising:
a film-forming substrate; and
a fluoropolymer comprising polymerized monomers of 2,3,3,3-tetrafluoropropene (HFO-1234yf).

2. The film-forming coating composition of claim1, wherein said composition further comprises a fluorinated co-monomer selected from the group consisting of CFH=CH₂, CF₂=CH₂, CF₂=CFH, CF₂=CF₂, CClF=CF₂, CBrF=CF₂, CF₃CH=CHF, CF₃CF=CF₂, CF₃CH=CF₂, cis-CF₃CF=CHF, trans-CF₃CF=CHF, CF₃CH=CH₂, CF₃CF=CH₂, CF₃CF₂CF=CF₂, CF₃CF₂CH=CF₂, CF₃CF₂CF=CHF, CF₃CF₂CH=CH₂, CF₃CF₂CF=CH₂, CF₃CF₂CF₂CF=CF₂, CF₃CF₂CF₂CH=CF₂, CF₃CF₂CF₂CF=CHF, CF₃CF₂CF₂CH=CH₂, CF₃CF₂CF₂CF=CH₂, CF₃CH=CHCF₃, CF₃CH=CFCF₃, CF₃CF=CFCF₃, HOCH₂CH=CHF, HOCH₂CH=CF₂, HOCH₂CF=CH₂, HOCH₂CF=CHF, HOCH₂CF=CF₂, HOCH₂CF=CH₂, CF₃CH=CHCl, CF₃CCl=CH₂, CF₃CCl=CHF, CF₃CCl=CF₂, CF₃CF=CHCl, CF₃CH=CFCl, (CF₃)₂C=CH₂, CF₃CF₂CF₂CF₂CH=CH₂, CF₃CF₂CF₂OCF=CF₂, CF₃OCF=CF₂, CF₃CF₂CF₂CF₂CH=CH₂, and mixtures thereof.

3. The film-forming coating composition of claim 1 further comprising the co-monomer CF₂₌CH₂.

4. The film-forming coating composition of any one of claims 1 to 3, wherein HFO-1234yf is provided in the fluoropolymer in an amount between 1 and 99 weight percent and the co-monomer(s) between 1 and 99 weight percent.

5. The film-forming coating composition of any one of claims 1 to 3, wherein HFO-1234yf is provided in the fluoropolymer in an amount between 10 and 90 weight percent and the co-monomer(s) between 10 and 90 weight percent.

6. The film-forming coating composition of any one of claims 1 to 3, wherein HFO-1234yf is provided in the fluoropolymer in an amount between 30 and 70 weight percent and the co-monomer(s) between 30 and 70 weight percent.

7. The film-forming coating composition of any one of claims 1 to 3, wherein HFO-1234yf is provided in the fluoropolymer in an amount at or greater than about 50 weight percent and the co-monomer(s) in an amount at or less than about 50 weight percent.

8. The film-forming coating composition of any one of claims 1 to 7, wherein the film-forming substrate compatibly promotes bonding or cross-linking with one or more functional elements of the fluoropolymer.

9. The film-forming coating composition of any one of claims 1 to 8, wherein the film-forming substrate is formed from one or more materials selected from the group consisting of polyesters, polyester urethanes, polycarbonates, polycarbonate urethanes, acrylics, acrylic polyurethanes, polyethers, polyether urethanes, ethylene vinyl alcohol copolymers, ethylene vinyl alcohol copolymer urethanes, polyamides, polyamide urethanes, polyamide ureas, polyacrylamides, polyacrylamide urethanes and combinations thereof.

10. The film-forming coating composition of any one of claims 1 to 9, wherein the fluoropolymer is provided in an amount of at least 10 weight percent of the film-forming coating composition.

11. The film-forming coating composition of any one of claims 1 to 9, wherein the fluoropolymer is provided in an amount of at least 25 weight percent of the film-forming coating composition.

12. The film-forming coating composition of any one of claims 1 to 9, wherein the fluoropolymer is provided in an amount of at least 50 weight percent of the film-forming coating composition.

13. The film-forming coating composition of any one of claims 1 to 12, further comprising one or more additives selected from the group consisting of silica, carbon- or silica-based nano-particules, therapeutic agents or compounds, high- or low-temperature additives, fillers, pigments, saturants, lubricants, tackifiers, adhesion promoters, film-formers, thickeners, processing aids, electrically conductive materials, electrically insulative materials, stabilizers, impact modifiers, viscosity modifiers, and combinations thereof.

14. The film forming composition of any one of claims 1 to 13 wherein the composition is applied to the surface of a substrate by dipping, immersing, spin-in, slot die, spraying, pouring, rolling or brushing or by hot melt press, or the film forming composition is extruded with the substrate or imbedded or impregnated into the surface of the substrate.

15. The film forming composition of claim 14 wherein the composition is allowed to dry or cure post application to the substrate.

16. The film forming composition of any one of claims 1 to 15, wherein the composition has a surface tension of no greater than 30 mN/m.
